# EUROPEAN PATENT APPLICATION

(11) **EP 4 206 626 A1**
(43) Date of publication of application: **05.07.2023**
(21) Application number: 21217935.2
(22) Date of filing: 28.12.2021
(51) Int. Cl.: G01J 3/02, G01N 21/65

(54) **CAPILLARY PROBE FOR HANDHELD RAMAN**

(71) Applicant: Serstech AB, 227 64 Lund (SE)
(72) Inventor: Billsten, Peter, 247 63 Veberöd (SE)
(74) Representative: AWA Sweden AB

(57) **Abstract**

The present invention relates to a handheld Raman spectroscopy device (10) comprising: a light source (11), a spectrometer (12), a capillary arrangement (21), and a focusing arrangement (13). The light source (11) is configured to emit light to the capillary arrangement (21) via the focusing arrangement (13), wherein the focusing arrangement (13) is configured to focus light (35) emitted from the light source (11) to a measurement location (22) in a capillary vessel (23) of the capillary arrangement (21).

## Description

### Field of the invention

The present invention relates to analysis of substances and more specifically analysis of substances by means of Raman spectroscopy. More particularly, the present invention relates to a handheld Raman spectroscopy device.

### Background art

To detect and to determine different substances is highly desired in a large variety of applications ranging from chemical analysis to in-field determination of potentially hazardous and toxic substances. In many situations correct determination of a substance is of utmost importance.

For instance, to be able to determine if a substance is hazardous, e.g. explosive, or not is critical since a wrongful determination may result in severe consequences potentially with personnel injuries and material losses. Similarly, it may also be critical to determine if a substance is toxic or not since a wrongful determination may result in serious consequences involving personnel and environmental risks. Further, it is highly important to verify that a drug is correctly synthesized since a wrongfully synthesized drug may become harmful instead of curative for a subject.

When detecting and determining different substances different approaches may be used.

A common way used to investigate properties of a substance is to let the substance undergo a chemical analysis. A chemical analysis of a substance is often accurate but is typically suffering from complexity and the time required for the analysis. Moreover, chemical analysis often require that various further substances or analytes are used or involved in the analysis. Such analysis therefore tends to become costly and time consuming. Another drawback resides in that such analysis are generally too complicated and time consuming to be conducted under field conditions.

Another commonly used approach for detecting and determining different substances is to use some form of spectroscopic analysis. A common type of spectroscopy used in this case is optical spectroscopy where light having interacted with the substance in question is analyzed using a spectrometer. The light interacting with the substance is scattered by the substance resulting in that the scattered light is affected by the substance. Such scattering from a substance can either be elastic or in-elastic. In elastic scattering the photons of scattered light exhibit the same energy as the photons impinging on the substance at hand. In in-elastic scattering the photons of scattered light exhibit a different energy as compared to the photons impinging on the substance at hand. In-elastically scattered photons therefore either gain or lose energy.

Both elastically and in-elastically scattered photons may be used in spectroscopic analyses of substances. When looking at elastically scattered photons certain properties, such as color, of the substance may be determined. However, when it comes to determining a certain substance more sophisticated spectroscopic techniques also relying on in-elastically scattered photons are generally required.

Raman spectroscopy is a spectroscopic technique relying on inelastic scattering of photons, known as Raman scattering. In Raman spectroscopy a source of monochromatic light, usually from a laser, is used. The light source may emit light in the visible, near infrared, or near ultraviolet range, although X-rays can also be used. The laser light interacts with molecular vibrations, phonons, or other excitations in the molecular system, resulting in that the energy of the laser photons being shifted up or down in the in-elastically scattered light thereof. The shift in energy gives information about the vibrational modes in the molecular system at hand. In other words, in-elastically light scattered from the molecules of the substance at hand gives rise to a vibrational spectrum that includes of a series of lines or peaks constituting a molecular "fingerprint" for the substance. Hence a substance or material will give rise to a unique Raman spectrum, i.e. its "fingerprint". The unique Raman spectrum makes Raman spectroscopy suitable for identifying or determining substances or materials. In many fields of technology Raman spectroscopy is a well-established spectroscopic technique for rapid identifications of substances and chemicals with high degree of accuracy.

A typical Raman spectrum of a substance shows the shift of Raman wavelengths relative to elastically scattered light, typically referred to as Rayleigh-scattered light. The Rayleigh-scattered light has the same wavelength as the incident light of the light source whereas the Raman wavelengths are shifted up or down relative to the Rayleigh-scattered light. The vertical axis of a Raman spectrum typically represents the intensity of the Raman wavelengths and yields the concentration of the chemical components of the sample or substance, whereas the horizontal axis of a Raman spectrum typically represents the wavelength shift in relation to the Rayleigh light.

The light from Raman scattering is typically associated with weak intensities and may be difficult to observe without intense monochromatic excitation and a sensitive detector. Typically, 1 out of 10⁶ - 10⁹ photons scattered by a sample is a photon relating to a Raman wavelength. However, modern technical development of lasers, detectors, and optical components as well as continued miniaturization of electronic components have made it possible to produce fast and reliable portable Raman instruments which are suitable to use under field conditions.

However, using a spectrometer based on Raman scattering in field conditions presents various challenges. For instance, in order for the spectrometer to provide a reliable and correct analysis of the sample at hand, it is generally required that the sample is collected. This is in itself a problem as many types of substances that are to be analyzed can be hazardous and not suited for collection without rigorous protective measures being taken beforehand. Moreover, substances can be hard to access and have characteristics that makes them difficult to collect without risking contamining equipment and personnel using the spectrometer.

### Summary of the invention

In view of that stated above, an object of the present invention is to facilitate using a handheld Raman spectroscopy device in field conditions.

Furthermore, it is an object to reduce the risk of contamination of personnel and/or the spectroscopy system by the substance being analysed.

It is also an object to reduce the risk of incorrect analysis results from the spectrometer.

Further still, it is an object to facilitate analysis of substances being situated in narrow and hard-to-reach positions.

To achieve at least one of the above objects and also other objects that will be evident from the following description, a handheld Raman spectroscopy device having the features defined in claim 1 is provided according to the present invention. Preferred embodiments of the device will be evident from the dependent claims.

More specifically, there is provided according to the present invention a handheld Raman spectroscopy device comprising a light source, a spectrometer, a capillary arrangement and a focusing arrangement. The light source is configured to emit light to the capillary arrangement via the focusing arrangement, the focusing arrangement is configured to focus light emitted from the light source to a measurement location in a capillary vessel of the capillary arrangement. The capillary vessel having a proximal end configured to allow light emitted by the light source to enter the capillary vessel and a distal end having a distal opening. The capillary vessel is configured to collect a liquid sample by capillary action through the distal opening such that the liquid sample is conveyed beyond the measurement location and the spectrometer is configured to receive light from the measurement location via the proximal end of the capillary vessel. The liquid sample can thus be analysed with reduced complexity and with reduced risk of the liquid sample contaminating the handheld Raman spectroscopy device. The liquid sample is further by the capillary action lifted/conveyed from the surface where it is found to the measurement location, which reduces the risk of undesired measurement artifacts that could be formed by the light hitting a surface distally of the liquid sample.

The spectrometer may be configured to receive light comprising a Raman response of the liquid sample, if present, at the measurement location. The Raman response can be compared to known Raman responses of substances of interest, for instance stored in a database, for identification of a substance of the liquid sample.

The capillary vessel may comprise a first portion and a second portion, the first portion being arranged distally of the second portion and configured to hold, by capillary action, the liquid sample collected through the distal opening. The second portion may have a larger cross-sectional area than the first portion such that the capillary action is reduced in the second portion in relation to the first portion and the measurement location is within the first portion. The risk of the liquid sample being conveyed near the handheld Raman spectroscopy device such that it causes contamination thereof is thus reduced.

The capillary vessel may be configured to collect a liquid sample having a volume between 20µl and 100µl.

A focal length of the focusing arrangement may be adjustable, whereby the measurement location is adjustable along a longitudinal direction extending between the proximal and distal end of the capillary vessel. The measurement can thus be made more reliable by adaptation of the measurement location. For instance, the viscosity of the liquid sample affects how far into capillary vessel the liquid sample is conveyed. The focal length can thus be adjusted accordingly.

The focusing arrangement may comprise a liquid lens, a focal length of the liquid lens may be adjustable. The measurement location may thus be adjustable along a longitudinal direction extending between the proximal and distal end of the capillary vessel.

The focal length of the liquid lens may be configured to be adjusted by adjusting a focus voltage applied to the liquid lens.

The capillary vessel may have a diameter of between 0.5 mm and 5 mm.

The capillary arrangement may comprise a holding device configured to hold the capillary vessel, the holding device may be further configured to be connected to a housing of the handheld Raman spectroscopy device. The holding device may thus facilitate attachment of the capillary vessel to the housing and further replacement of the capillary vessel once used. Moreover, the holding device may be configured to align the longitudinal direction of the capillary vessel with the optical axis of the light passing through the focusing arrangement, such that the light does not interfere or intersect the walls of the capillary vessel before arriving at its focal point at the measurement location.

The capillary arrangement may comprise an optical element configured to direct light emitted by the light source such that light emitted by the light source is allowed to enter the capillary vessel. The optical element may allow the capillary vessel to access samples in narrow spaces, facilitating taking measurements with the handheld Raman spectroscopy device. Further, the optical element may provided additional distance between the handheld Raman spectroscopy device and the sample when performing measurements, thus reducing the risk of contamination of the handheld Raman spectroscopy device.

The measurement location may be located at a distance between 1 mm to 5 mm from the distal opening.

The light source may be a laser.

The capillary vessel may further be releasably attached to the capillary arrangement.

The capillary vessel may be configured for single use. In other words, the capillary vessel may be disposable. Hence, capillary vessel may be made of a suitable low cost material suitable for being disposed after a single use.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Figure 1 discloses a schematic drawing of a handheld Raman spectroscopy device.
Figure 2 discloses a front view of a handheld Raman spectroscopy device.
Figure 3 discloses a side view of a capillary vessel of a capillary arrangement of a handheld Raman spectroscopy device.
Figure 4 discloses a side view of a capillary vessel of a capillary arrangement of a handheld Raman spectroscopy device.
Figure 5 discloses a side view of a holding device of a capillary arrangement of a handheld Raman spectroscopy device.
Figure 6 discloses a front view of a handheld Raman spectroscopy device.
Figure 7 discloses a front view of a handheld Raman spectroscopy device.

### Description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

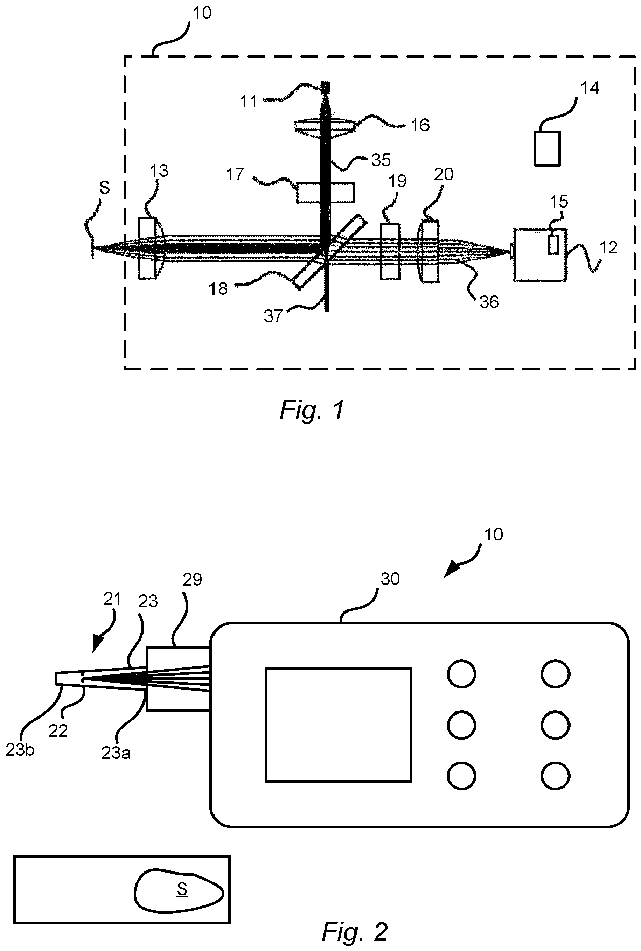

Figure 1 illustrates a Raman spectroscopy device 10 for analyzing inelastic scattered light from a sample S. The device 10 comprises a light source 11 such as an electromagnetic radiation source 11, a spectrograph unit 12 comprising a spectrometer, a focusing arrangement 13 such as a lens. The device 10 may further comprise a control unit 14. The spectrometer may further comprise a detector 15.

The light source 11 emits electromagnetic radiation, e.g. monochromatic light, which passes through the focusing arrangement 13, and then the focused light hits the sample and illuminates a spot of the sample resulting in a scattering of the light, the scattered light is focused and collected to reach a slit of the spectrometer and is then received by the detector.

The Raman spectroscopy device illuminates the sample S with a focused electromagnetic beam, such as laser light, to produce a spot on the sample S for excitation of the sample, hence scattered Raman light will appear. The light source 11, for example a laser diode, emits laser light that may be collimated through a laser collimation lens 16. The laser light may have a wavelength of 785 nm. Other suitable wavelengths may be used to advantage. Subsequently, the laser light propagates through an optional laser clean up filter 17 and may be redirected 90° by an interference filter 18 towards the sample S. The interference filter may be a dichroic filter.

The laser beam is focused onto a small portion of the sample S, typically smaller than 20µm, by the focusing arrangement 13. Then, the laser light interacts with the molecules of the sample S and Raman photons are scattered. Thereafter, the scattered Raman light propagates trough the focusing arrangement 13, the optional interference filter 18 and may further pass through a long pass filter 19 and be focused on an entrance slit (not shown) of the spectrometer 15, for instance by an in-coupling lens IL (not shown).

The spectroscopy device 10 may be embodied in other ways as well, as is realized by a person skilled in the art. It is also to be realized that the illustration of the handheld Raman spectroscopy device 10 in Figure 1 and the following Figures is schematic and for the conceptual understanding of the teachings herein. For instance, the convergence of the light 35 emitted from the light source 11 and the convergence thereof after passing through the focusing arrangement 13 is exaggerated to illustrate the function of the focusing arrangement 13.

Moreover, the handheld Raman spectroscopy device 10 may be provided with additional components to those shown in Figure 1.

Figure 2 discloses a front view of the handheld Raman spectroscopy device 10. In Figure 2, the device 10 is provided with a capillary arrangement 21. The capillary arrangement 21 is configured to facilitate analysing liquid samples S which can by capillary forces be extracted/conveyed into a capillary vessel 22 of the capillary arrangement 21. The capillary vessel 22 is configured to be placed in contact with the liquid sample S whereby the sample S is extracted from the surface and conveyed into the vessel 22 beyond a measurement location 22 thereof by capillary action. The measurement location 22 is preferably located at a distance between 1 mm to 5 mm from a distal opening 25 of the capillary vessel 23.

The capillary vessel 23 has a proximal end 23a configured to allow light 35 emitted by the light source 11 to enter the capillary vessel 23 and a distal end 23b having the distal opening 25. The distal opening 25 may be a circular opening in a plane essentially perpendicular to the direction of the light emitted by the light source 11 passing through the capillary vessel 23. The distal opening 25 may further be arranged in a plane arranged at an angle other than perpendicularly in relation to the light emitted by the light source 11 passing through the capillary vessel 23.

The capillary vessel 23 is configured to collect the liquid sample S by capillary action through the distal opening 25 such that the liquid sample S is conveyed beyond the measurement location 22, as mentioned in the foregoing. The focusing arrangement 13 is configured to focus light 35 emitted from the light source 11 to the measurement location 22 in the capillary vessel 23 of the capillary arrangement 21.

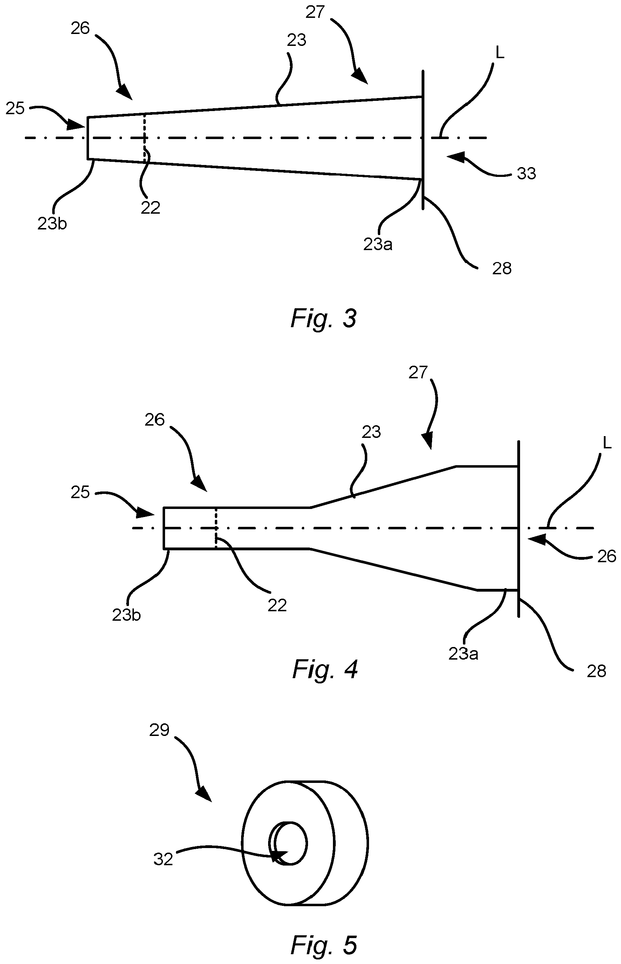

An optical axis of the focusing arrangement 13 may be aligned with a central longitudinal axis L (shown in Figure 3) of the capillary vessel 23.

The capillary vessel 23 is configured to collect a liquid sample S having a volume between 20µl and 100µl. Naturally, other volumes are also possible and depend on the dimensions of the capillary vessel 23.

The capillary vessel 23 preferably has a diameter of between 0.5 mm and 5 mm. Specifically, a first portion 26 thereof (shown in Figures 3 and 4), has a diameter between 0.5 mm and 5 mm. The capillary vessel 23 may at the measurement location 22 have a diameter of between 2.0 mm and 2.5 mm, preferably approximately 2.2 mm.

The light focused by the focusing arrangement 13 is configured to generate a Raman response from the sample S when present in the capillary vessel 23, whereby the spectrometer 12 is configured to receive light from the measurement location 22 via the proximal end 23a of the capillary vessel 23. The spectrometer 12 can thus analyse the Raman response triggered by the liquid sample S when present to determine a substance by comparing the Raman response with known Raman responses from a plurality of substances stored in a database. The database may be formed on an internal memory (not shown) of the handheld Raman spectroscopy device 10 connected to the control unit 14 of the handheld Raman spectroscopy device 10. The database may further be external to the handheld Raman spectroscopy device 10, for instance on a remote server such as a cloud database, to which the handheld Raman spectroscopy device may be connected either by a wired connection or wirelessly via for instance a transmitter or a transceiver associated with the control unit 14 of the handheld Raman spectroscopy device 10.

A focal length of the focusing arrangement 13 may be adjustable, such that the measurement location 22 is adjustable along a longitudinal direction L extending between the proximal end 23a and the distal end 23b of the capillary vessel 23. The focal length is thus adaptable such the measurement location 22 may be shifted to accommodate varying positions of the liquid sample S in the capillary vessel 23.

The focusing arrangement 13 may for the purpose of adjusting the focal length thereof comprise a liquid lens. As the focal length of the liquid lens is adjustable, the measurement location 22 is adjustable along a longitudinal direction L extending between the proximal end 23a and distal end 23b of the capillary vessel 23. The focal length of the liquid lens is configured to be adjusted by adjusting a focus voltage applied to the liquid lens, for instance as controlled by the control unit 14 of the handheld Raman spectroscopy device 10.

As is furhter shown in Figure 2, the proximal end 23a of the capillary vessel 23 is configured to allow light 35 emitted by the light source 11 to enter the capillary vessel 23.

The handheld Raman spectroscopy device 10 may be provided with a holding device 29 forming part of the capillary arrangement 23 configured for holding the capillary vessel 23. The holding device 29 is configured to be connected to a housing 30 of the handheld Raman spectroscopy device 10, for instance by means of a threaded connection or for instance an annular snap-fit connection. The connection of the holding device 29 to the housing is releasable.

The holding device 29 is configured to fixate the capillary vessel 23 in relation to the handheld Raman spectroscopy device 10, and may be formed essentially as a cap that can be connected over an aperture in the housing 30 (not shown) through which the light emitted by the light source 11 exits/enters the handheld Raman spectroscopy device 10. The holding device 29 may comprise an opening 32 (shown in Figure 5), through which the capillary vessel 23 is arrangable.

Figure 3 shows a side view of the capillary vessel 23. The capillary vessel 23 is illustrated having a truncated conical shape. It is however to be realized that the capillary vessel 23 may be provided with an elongated cylindrical shape, for instance as an elongated tube. The capillary vessel 23 is preferably made out of a plastic material such as polyethylene. The capillary vessel 23 may also be made from glass. The capillary vessel 23 is preferably configured for single use. Since the liquid sample S may be toxic or otherwise not suited for cleaning from the capillary vessel 23 it is generally desired to be able to dispose of the capillary vessel 23 after use. Further still, as certain substances could form undesired reactions with other substances, it is generally not desireable to rely on reused capillary vessels 23 where there is a risk of residues being present.

The capillary vessel 23 may be provided with a first portion 26 and a second portion 27, the first portion 26 being arranged distally of the second portion 27 and configured to hold, by capillary action, the liquid sample S collected through the distal opening 25. The measurement location 22 is arranged in the first portion 26. The second portion 27 has a larger cross-sectional area than the first portion 26 such that the capillary action is reduced in the second portion 27 in relation to the first portion 26. The risk of the liquid sample S being conveyed under capillary action or by other forces acting on the sample S past the second portion 27 and into the handheld Raman spectroscopy device 10 is thus reduced.

The capillary vessel 23 may be provided with a proximal opening 33, for allowing light to pass through the capillary vessel 23. It is however to be realized that a cover may be arranged over the proximal opening 33, the cover being transparent or permeable to light while preventing that the liquid sample S passes therethrough. The cover could for instance be formed by a light permeable plastic material. The cover could thus reduce the risk of the liquid sample S contaminating the handheld Raman spectroscopy device 10.

Further shown in Figure 3 is that the capillary vessel 23 may be provided with an annular lip 28 at the proximal end 23a of the capillary vessel 23. The annular lip 28 is preferably provided with an outer diameter being larger than the diameter of the opening 32 in the holding device 29, thus allowing the capillary vessel 23 to be arranged with the annular lip 28 arranged against the proximal side of the holding device 29 and extending through the opening 32. Preferably, the diameter of the capillary vessel 23 at the proximal end 23a thereof essentially corresponds to the diameter of the opening 32 in the holding device 29.

Figure 4 discloses a side view of another embodiment of the capillary vessel 23. The capillary vessel 23 illustrated in Figure 4 comprises a first portion 26 having a shape that differs from a shape of the second portion 27.

The first portion 26 may as is illustrated in Figure 4 be provided with a cylindrical shape having a constant diameter along the longitudinal direction L. The second portion 27 may be provided with a conical shape adjacent to the first portion 26 which transitions proximally to a cylindrical shape with a constant diameter along the longitudinal direction L. The first portion 26 may also be provided with a conical shape. The first portion 26 can thus be adapted to achieve a large capillary effect on the liquid sample S while the second portion 27 is formed to avoid that the liquid sample S contaminates the handheld Raman spectroscopy device 10 and for faciltating attachment of the capillary vessel 23 by means of the holding device 29 to the housing 30.

Figure 5 discloses a side perspective view of the holding device 29 of the capillary arrangement 23 of the handheld Raman spectroscopy device 10. The holding device 29, as mentioned, comprises an opening 32. The opening 32 is configured to the receive the capillary vessel 23, whereby the capillary vessel 23 is secured in relation to the holding device 29 and the housing 30 of the handheld Raman spectroscopy device 10 such that the longitudinal direction L of the capillary vessel 23 is aligned the optical axis of light passing through the focusing arrangement 13.

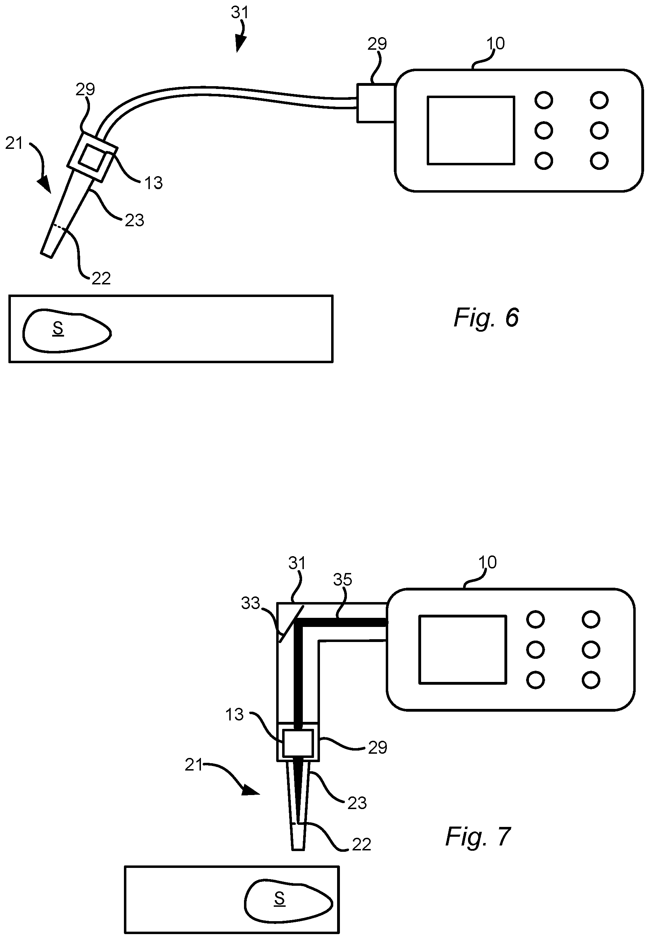

Figure 6 discloses a side view of the handheld Raman spectroscopy device 10. It is shown how the capillary arrangement 21 comprises an optical element 31 configured to direct light 35 emitted by the light source 11 such that light 35 emitted by the light source 11 is allowed to enter the capillary vessel 23.

The optical element 31 may be an optical fibre as illustrated in Figure 6. The optical fibre being configured to redirect the light 35 emitted from the light source 11 by means of total internal reflection and further to correspondingly redirect the light scattered from the liquid sample S comprising the Raman response triggered by the light 35 hitting the liquid sample S.

The measurement by means of the handheld Raman spectroscopy device 10 may thus be performed at an angle with respect to the device 10. Moreover, the distance between the handheld Raman spectroscopy device 10 and the liquid sample S may be increased which improves the safety of taking measurements as well as reducing the risk of contamination of the device 10. Moreover, taking measurements of liquid samples S in confined spaces where for instance there is insufficient space for the entire handheld Raman spectroscopy device 10 can accordingly be accessed by means of the optical element 31 and the capillary arrangement 21 connected thereto.

The handheld Raman spectroscopy device 10 may be provided with a holding device 29 for holding the optical element 31 and a further holding device 29 for holding the capillary vessel 23 to the optical element 31.

Moreover, as is shown in Figure 6, the optical element 21 may be provided with a focusing arrangement 13, such as a lens or liquid lens as defined in the foregoing, either as a substitute for the focusing arrangement 13 in the housing 30 of the handheld Raman spectroscopy device 10 or as an additional focusing arrangement 13 complementing the focusing arrangement 13 in the housing 30 of the handheld Raman spectroscopy device 10. The focal point can thus controlled with greater precision and any possible detrimental effect that the optical element 31 could have on the light 35 emitted from the light source 11 and passing through the optical element 31 can be compensated for.

Figure 7 discloses a front view of a handheld Raman spectroscopy device 10 provided with an optical element 31. In the embodiment shown in Figure 7, the optical element 31 is in the form an angular tubular section being provided with a mirror 33 which is configured to redirect the light 35 exiting the handheld Raman spectroscopy device 10 towards the capillary arrangement 21 and vice versa for the light scattered from the measurement location 22. The tubular section of the optical element 31 may be made out of a material that is not permeable for nor affected by the light 35 emitted by the light source 11, for instance aluminium or stainless steel. The tubular section of the optical element 31 is illustrated as having a right angle bend, it is however to be realized that the tubular section could be provided with other angles as well.

It will be appreciated that the present invention is not limited to the embodiments shown. Several modifications and variations are thus conceivable within the scope of the invention which thus is exclusively defined by the appended claims.

## Claims

1. A handheld Raman spectroscopy device (10) comprising:
a light source (11),
a spectrometer (12),
a capillary arrangement (21), and
a focusing arrangement (13), wherein the light source (11) is configured to emit light to the capillary arrangement (21) via the focusing arrangement (13),
wherein the focusing arrangement (13) is configured to focus light (35) emitted from the light source (11) to a measurement location (22) in a capillary vessel (23) of the capillary arrangement (21), the capillary vessel (23) having a proximal end (23a) configured to allow light (35) emitted by the light source (11) to enter the capillary vessel (23) and a distal end (23b) having a distal opening (25), wherein the capillary vessel (23) is configured to collect a liquid sample (S) by capillary action through the distal opening (25) such that the liquid sample (S) is conveyed beyond the measurement location (22), and wherein the spectrometer (12) is configured to receive light from the measurement location (22) via the proximal end (23a) of the capillary vessel (23).

2. The handheld Raman spectroscopy device (10) according to claim 1, wherein the spectrometer (12) is configured to receive light comprising a Raman response of the liquid sample (S), if present, at the measurement location (22).

3. The handheld Raman spectroscopy device (10) according to claim 1 or 2, wherein the capillary vessel (23) comprises a first portion (26) and a second portion (27), the first portion (26) being arranged distally of the second portion (27) and configured to hold, by capillary action, the liquid sample (S) collected through the distal opening, and wherein the second portion (27) has a larger cross-sectional area than the first portion (26) such that the capillary action is reduced in the second portion (27) in relation to the first portion (26), and wherein the measurement location (22) is within the first portion (26).

4. The handheld Raman spectroscopy device (10) according to any one of the preceding claims, wherein the capillary vessel (23) is configured to collect a liquid sample (S) having a volume between 20µl and 100µl.

5. The handheld Raman spectroscopy device (10) according to any one of the preceding claims, wherein a focal length of the focusing arrangement (13) is adjustable, whereby the measurement location (22) is adjustable along a longitudinal direction extending between the proximal end (23a) and the distal end (23b) of the capillary vessel (23).

6. The handheld Raman spectroscopy device (10) according to any one of the preceding claims, wherein the focusing arrangement (13) comprises a liquid lens, wherein a focal length of the liquid lens is adjustable, whereby the measurement location (22) is adjustable along a longitudinal direction extending between the proximal end (23a) and distal end (23b) of the capillary vessel (23).

7. The handheld Raman spectroscopy device (10) according to claim 6, wherein the focal length of the liquid lens is configured to be adjusted by adjusting a focus voltage applied to the liquid lens.

8. The handheld Raman spectroscopy device (10) according to any one of the preceding claims, wherein the capillary vessel (23) has a diameter of between 0.5 mm and 5 mm.

9. The handheld Raman spectroscopy device (10) according to any one of the preceding claims, wherein the capillary arrangement (21) comprises a holding device (29) configured to hold the capillary vessel (23), the holding device (29) being further configured to be connected to a housing (30) of the handheld Raman spectroscopy device (10).

10. The handheld Raman spectroscopy device (10) according to any one of the preceding claims, wherein the capillary arrangement (21) comprises an optical element (31) configured to direct light (35) emitted by the light source (11) such that light (35) emitted by the light source (11) is allowed to enter the capillary vessel (23).

11. The handheld Raman spectroscopy device (10) according to any one of the preceding claims, wherein the measurement location (22) is located at a distance between 1 mm to 5 mm from the distal opening (25).

12. The handheld Raman spectroscopy device (10) according to any one of the preceding claims, wherein the light source (11) is a laser.

13. The handheld Raman spectroscopy device (10) according to any one of the preceding claims, wherein the capillary vessel (23) is releasably attached to the capillary arrangement (21).

14. The handheld Raman spectroscopy device (10) according to claim 13, wherein the capillary vessel (23) is configured for single use.
